# EUROPÄISCHE PATENTSCHRIFT

(11) **EP 1 559 490 B1**
(45) Veröffentlichungstag und Bekanntmachung des Hinweises auf die Patenterteilung: **30.11.2011**
(21) Anmeldenummer: 05001609.6
(22) Anmeldetag: 27.01.2005
(51) Int. Cl.: B23B 29/20

(54) **Werkzeughalter**
Tool holder
Porte outil

(30) Priorität: 30.01.2004 DE 102004005499
(43) Veröffentlichungstag der Anmeldung: 03.08.2005
(73) Patentinhaber: Index-Werke GmbH & Co. KG Hahn & Tessky, 73730 Esslingen (DE)
(72) Erfinder: Grossmann, Walter, 73240 Wendlingen (DE)
(74) Vertreter: Hoeger, Stellrecht & Partner Patentanwälte

(56) Entgegenhaltungen:
- EP-A1- 0 416 610
- EP-A1- 0 780 179
- US-A- 2 436 952
- US-A- 3 815 928
- US-A- 6 003 415

## Beschreibung

Die Erfindung betrifft einen Werkzeughalter für Werkzeugträger von Werkzeugmaschinen, umfassend einen ein Werkzeug tragenden Werkzeughalterkörper mit einer Anlagefläche, einen vom Werkzeughalterkörper abstehenden und sich über die Anlagefläche hinaus erstreckenden Schaft mit einem Stützflächenbereich, wobei zum exakten Positionieren des Werkzeughalterkörpers an dem Werkzeugträger der Werkzeughalterkörper in Richtung einer ungefähr parallel zu einer Schaftlängsachse verlaufenden Ausrichtachse durch Anlegen der Anlagefläche an einer Auflageseite des Werkzeugträgers positionierbar ist und in einer Richtung quer zur Ausrichtachse durch Anlegen des Stützflächenbereichs an einem Positionierflächenbereich einer im Werkzeugträger vorgesehenen Aufnahme für den Schaft positionierbar ist.

Derartige Werkzeughalter sind beispielsweise aus der europäischen Patentanmeldung 0 780 179 bekannt.

Bei diesen Werkzeughaltern besteht das Problem, daß die Aufnahme für den Schaft im Werkzeugträger aufgrund von Herstellungstoleranzen den Werkzeughalterkörper nicht so positioniert, daß die Ausrichtachse die theoretisch notwendige Lage aufweist, die erforderlich ist, um das Werkzeug mit der gewünschten Präzision relativ zu einer durch die Spindelachse verlaufenden Bearbeitungsebene ausrichten zu können.

Der Erfindung liegt daher die Aufgabe zugrunde, einen Werkzeughalter der gattungsgemäßen Art derart zu verbessern, daß eine möglichst präzise Positionierung des Werkzeugs in der Bearbeitungsebene erreichbar ist.

Diese Aufgabe wird bei einem Werkzeughalter gemäß dem Anspruch 1 gelöst.

Der Vorteil der erfindungsgemäßen Lösung ist somit darin zu sehen, daß diese es durch die mögliche Variation des Abstandes zwischen der Ausrichtachse und dem Stützflächenbereich erlaubt, die Lage der Ausrichtachse relativ zum Werkzeugträger entsprechend den sich zeigenden Toleranzen einzustellen und somit das Werkzeug mit seiner Schneide möglichst exakt relativ zu der Bearbeitungsebene zu positionieren und auszurichten. Im Falle eines rotierend arbeitenden Werkzeugs ist insbesondere die Rotationsachse exakt in der Bearbeitungsebene positionierbar und im Fall eines Schneidwerkzeugs eine Schneidkante.

Ein derartiges Stützflächensegment am Schaft läßt sich konstruktiv besonders einfach dann realisieren, wenn der Schaft mindestens zwei Schaftsegmente aufweist, von denen ein erstes das Stützflächensegment bildet.

Es ist aber auch denkbar, den Schaft aus mehr als zwei Schaftsegmenten auszubilden und mehr als ein Schaftsegment als Stützflächensegment auszubilden, die relativ zur Ausrichtachse variabel positionierbar sind.

Vorzugsweise ist dabei ein zweites der Schaftsegmente so ausgebildet, daß dieses eine Verzahnung aufweist, mit welcher der Schaft in der Aufnahme einspannbar ist.

Beim Vorsehen nur zweier Schaftsegmente ist vorzugsweise das erste Schaftsegment auf einer dem zweiten Schaftsegment gegenüberliegenden Seite des Schaftes angeordnet, so daß durch Beaufschlagen der Verzahnung und somit Beaufschlagen des zweiten Schaftsegments das erste Schaftsegment mit dem Stützflächenbereich an dem Positionierflächenbereich der Aufnahme kraftbeaufschlagt angelegt wird.

Prinzipiell wäre es denkbar, die beiden Schaftsegmente als beispielsweise beweglich miteinander verbundene Teile des Schaftes auszuführen. Dies würde jedoch die Positionierung des ersten Schaftsegments relativ zur Ausrichtachse problematisch gestalten.

Aus diesem Grund ist vorzugsweise vorgesehen, daß das erste Schaftsegment ein vom Schaft trennbares Teil ist.

Die Positionierung des Stützflächensegmentes relativ zur Ausrichtachse kann in unterschiedlichster Art und Weise erfolgen. Beispielsweise wäre es denkbar, beide Schaftsegmente bewegbar mit dem Ausrichtkörper zu verbinden. Damit wäre eine Einstellbarkeit des Stützflächensegmentes zur Ausrichtachse möglich, jedoch keine präzise vorhersehbare Variation der Position des Stützflächensegments relativ zur Ausrichtachse.

Aus diesem Grund sieht eine besonders vorteilhafte Lösung vor, daß das Stützflächensegment relativ zu einem definiert zur Ausrichtachse verlaufenden Schaftkernkörper variabel positionierbar ist.

Dadurch, daß der Schaftkernkörper definiert zur Ausrichtachse verläuft, ist die Einstellbarkeit des Stützflächensegmentes zur Ausrichtachse mit einfachen Mitteln und der notwendigen Präzision realisierbar.

So sieht eine bevorzugte Ausführungsform vor, daß das Stützflächensegment relativ zum Schaftkernkörper mittels einer Einstelleinrichtung in einer Einstellrichtung variabel positionierbar ist.

Mit einer derartigen Einstelleinrichtung besteht somit die Möglichkeit, die Position des Stützflächensegments relativ zum Schaftkernkörper präzise zu variieren.

Eine konstruktiv einfache und für große Kräfte geeignete Lösung der Einstelleinrichtung sieht vor, daß diese ein Keilgetriebe umfaßt.

Die Einstelleinrichtung kann in unterschiedlichster Art und Weise ausgebildet sein. Eine vorteilhafte Lösung sieht vor, daß die Einstelleinrichtung mindestens ein einstellbares Keilelement aufweist.

Besonders günstig ist es, wenn die Einstelleinrichtung zwei zusammenwirkende Keilelemente aufweist, da in diesem Fall die Einstelleinrichtung einerseits über deren Keilflächen große Kräfte aufnehmen kann und andererseits eine eine Ausrichtung erhaltende Bewegbarkeit des Stützflächensegmentes relativ zum Schaftkernkörper erlaubt.

Prinzipiell könnte die Einstelleinrichtung so ausgebildet sein, daß die Keilelemente zwischen dem Stützflächensegment und dem Schaftkernkörper angeordnet und wirksam sind.

Eine derartige Lösung läßt sich konstruktiv günstig dann realisieren, wenn der Schaftkernkörper selbst als Keilelement ausgebildet ist.

Eine konstruktiv besonders einfache und auch günstig realisierbare Ausbildung der erfindungsgemäßen Lösung sieht vor, daß das Stützflächensegment selbst als Keilelement ausgebildet ist.

Zweckmäßigerweise ist dabei das Stützflächensegment als das einstellbare Keilelement ausgebildet.

Ein Keilelement einer erfindungsgemäßen Einstelleinrichtung kann Keilflächen aufweisen, die in unterschiedlicher Weise wirksam sind.

Beispielsweise könnte das Keilelement als Exzenterkörper ausgebildet sein, welcher um eine ungefähr parallel zur Ausrichtachse drehbare Achse drehbar ist.

Die Einstellung des Keilelements ist jedoch dann besonders zweckmäßig ausführbar, wenn das Keilelement in einer Verschieberichtung, insbesondere ungefähr linear, verschiebbar ist.

Eine konstruktiv besonders zweckmäßige Lösung sieht vor, daß das Keilelement ungefähr in Richtung parallel zur Schaftlängsachse verschiebbar ist.

Um eine definierte Bewegung des Keilelements realisieren zu können, ist vorzugsweise vorgesehen, daß das Keilelement durch Führungselemente bewegbar geführt ist.

Besonders günstig ist es, wenn das Keilelement durch die Führungselemente am Schaftkernkörper nur in einer definierten Verschieberichtung bewegbar geführt ist.

Um das jeweilige Keilelement geeignet in seine für die Einstellung der Ausrichtachse zum Stützflächenbereich geeignete Position zu bringen, ist vorzugsweise vorgesehen, daß das Keilelement durch ein Stellelement einstellbar ist.

Ein derartiges Stellelement kann im einfachsten Fall als Stellschraube ausgebildet sein.

Um die einmal gewählte Position des Keilelementes langfristig aufrecht erhalten zu können, ist vorzugsweise vorgesehen, daß das Keilelement kraftschlüssig in der eingestellten Position festlegbar ist.

Besonders zweckmäßig ist es dabei, wenn das Keilelement relativ zum Schaftkernkörper in der eingestellten Position festlegbar ist.

Eine weitere vorteilhafte Ausführungsform der Einstelleinrichtung sieht vor, daß diese ein austauschbares Abstandselement umfaßt, welches zwischen dem Schaftkernkörper und dem Stützflächensegment einsetzbar ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Draufsicht von oben auf eine Drehmaschine mit einem erfindungsgemäßen Werkzeughalter;
- Fig. 2: eine Frontansicht in Richtung des Pfeils A in Fig. 1;
- Fig. 3: einen Schnitt längs Linie 3-3 in Fig. 2;
- Fig. 4: einen Schnitt längs Linie 4-4 in Fig. 2;

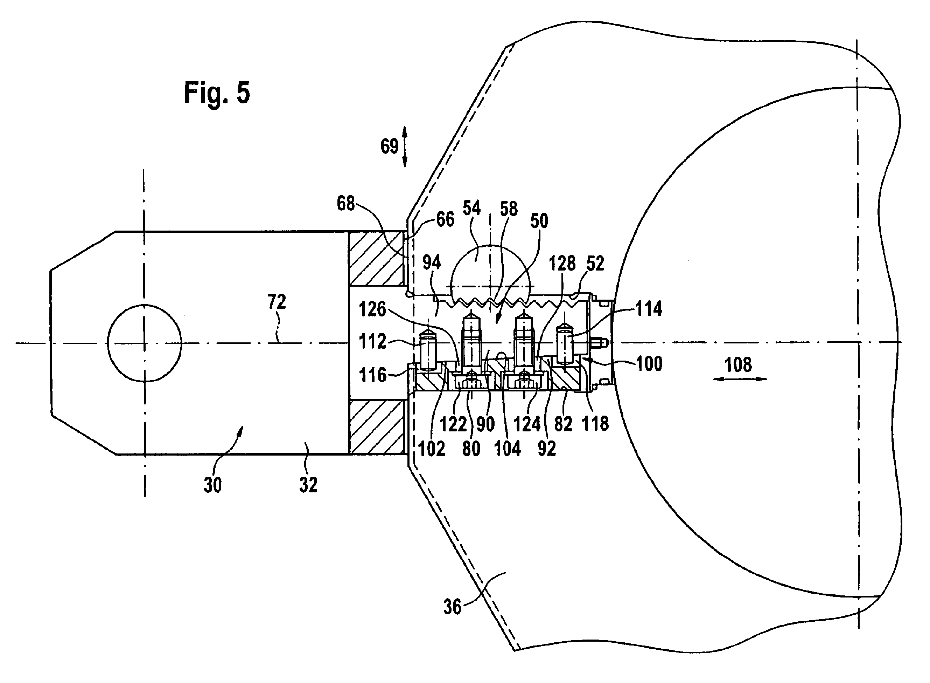

- Fig. 5: eine vergrößerte Schnittdarstellung in einer Ansicht ähnlich Fig. 2 des ersten Ausführungsbeispiels;
- Fig. 6: einen Schnitt ähnlich Fig. 5 eines zweiten Ausführungsbeispiels;
- Fig. 7: einen Schnitt ähnlich Fig. 5 eines dritten Ausführungsbeispiels und
- Fig. 8: einen Schnitt ähnlich Fig. 5 eines vierten Ausführungsbeispiels.

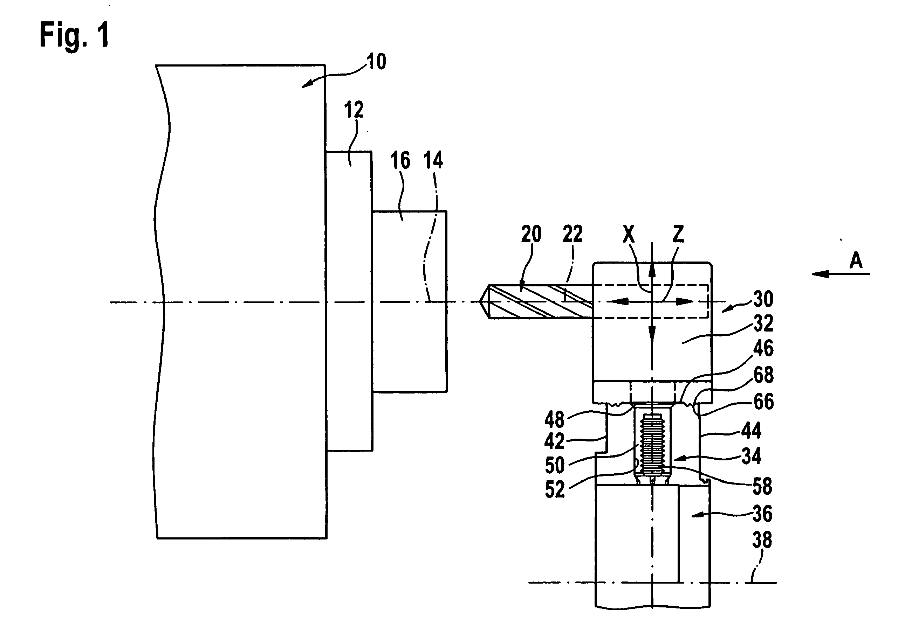

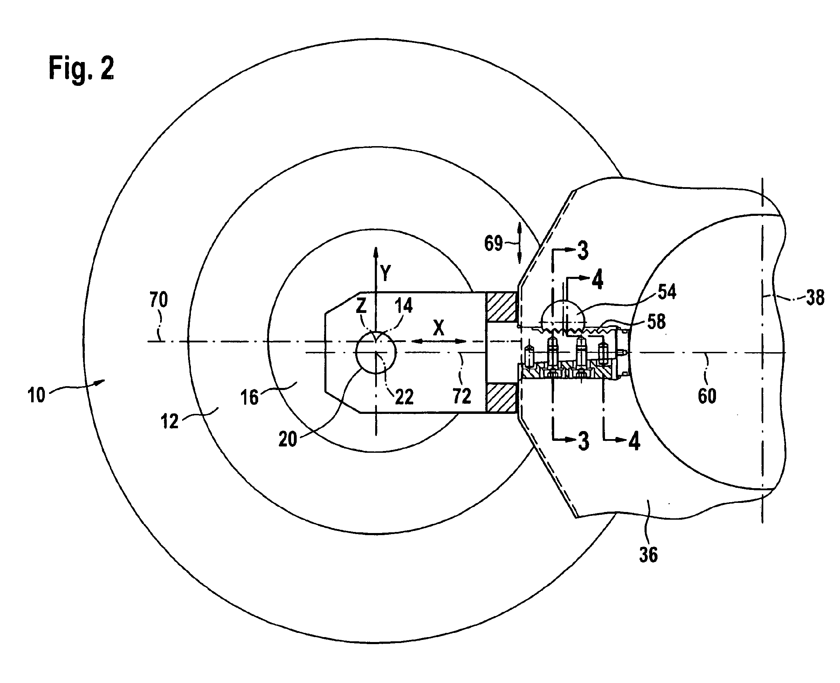

Ein Ausführungsbeispiel einer Drehmaschine, bei welcher ein erfindungsgemäßer Werkzeughalter einsetzbar ist, umfaßt, wie in Fig. 1 und 2 dargestellt, ein Spindelgehäuse 10, in welchem eine Werkstückspindel 12 um eine Spindelachse 14 drehbar gelagert ist, so daß ein in der Werkstückspindel 12 eingespanntes Werkstück 16 um die Spindelachse 14 zur Bearbeitung desselben drehbar antreibbar ist.

Die Bearbeitung des Werkstücks 16 erfolgt mittels eines Werkzeugs 20, welches in Fig. 1 beispielsweise als Bohrer dargestellt ist, welcher seinerseits eine Mittelachse 22 aufweist.

Das Werkzeug 20 ist gehalten von einem als Ganzes mit 30 bezeichneten erfindungsgemäßen Werkzeughalter, der einen Werkzeughalterkörper 32 aufweist, welcher in einer Werkzeugstation 34 eines um eine Revolverachse 38 drehbaren Revolverkopfes 36 eines Werkzeugrevolvers angeordnet ist, wobei der Werkzeugrevolver auf einem zeichnerisch nicht dargestellten Maschinengestell sitzt, welches ebenfalls das Spindelgehäuse 10 trägt.

Die Bearbeitung des Werkstücks 16 erfolgt dadurch, daß das Werkzeug 20 und das Werkstück 16 relativ zueinander zumindest in einer parallel zur Spindelachse 14 verlaufenden Z-Richtung und quer zu der Z-Richtung in einer X-Richtung bewegbar sind, wobei die X-Richtung vorzugsweise quer zu der Revolverachse 38 verläuft.

Bei dem dargestellten Ausführungsbeispiel ist der Revolverkopf 36 als Revolverkopf eines Sternrevolvers ausgebildet, welcher für jede der Werkzeugstationen 34 eine zwischen seinen beiden Stirnseiten 42 und 44 liegende Auflageseite 46 aufweist, auf welcher der Werkzeughalterkörper 32 mit einer Anlagefläche 48 aufsetzbar ist, um sich auf der Auflageseite 46 abzustützen.

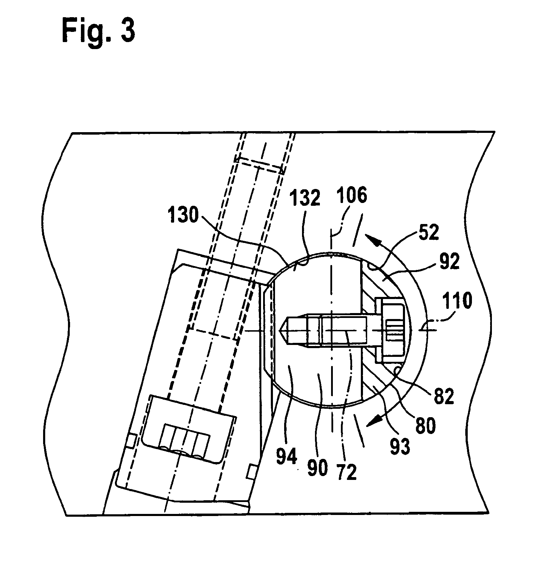

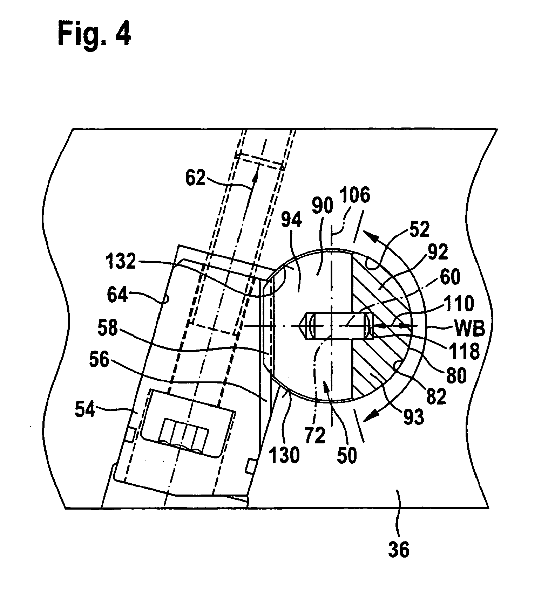

Ferner umfaßt der Werkzeughalter 30 einen sich vom Werkzeughalterkörper 32 ausgehend und von der Anlagefläche 48 abstehenden Schaft 50, welcher in eine sich ausgehend von der Auflageseite 46 in den Revolverkopf 36 hinein erstreckende Aufnahme 52 einsetzbar und, wie in Fig. 3 und 4 dargestellt, im Revolverkopf 36 durch ein Spannelement 54 fixierbar ist, wobei das Spannelement 54 mit einer dem Schaft 50 zugewandten Verzahnung 56 in eine Verzahnung 58 am Schaft 50 eingreift.

Vorzugsweise ist das Spannelement 54 in Richtung quer zu einer Schaftlängsachse 60 verlaufenden Spannrichtung 62 in einer Bohrung 64 des Revolverkopfes 36 bewegbar geführt und damit in Richtung der Verzahnung 58 bewegbar.

Außerdem sind vorzugsweise zwischen dem Werkzeughalterkörper 32 und dem Revolverkopf 36 zusammenwirkende Formschlußelemente 66, 68 wirksam, von denen beispielsweise die Formschlußelemente 66 mit dem Werkzeughalterkörper 32 verbunden sind und die Formschlußelemente 68 mit dem Revolverkopf 36.

Durch diese Formschlußelemente 66, 68 erfolgt eine eindeutige drehfeste Fixierung des Werkzeughalterkörpers 32 relativ zum Revolverkopf 36 bezüglich einer Drehung um die Schaftlängsachse 60.

Beispiele derartiger Formschlußelemente 66, 68 sind in der europäischen Patentanmeldung 0 416 610 A1 oder in der deutschen Patentanmeldung 103 43 327 A beschrieben.

Vorzugsweise bewirken die Formschlußelemente 66, 68 aufgrund ihrer Formschlußgeometrie mit beispielsweise V-förmigen Schrägflächen auch noch eine exakte Positionierung des Werkzeughalterkörpers 32 relativ zum Revolverkopf in einer ersten Positionierrichtung, die quer zu einer zweiten Positionierrichtung 69 verläuft, wie dies in der deutschen Patentanmeldung 103 43 327 A im einzelnen beschrieben ist, auf welche diesbezüglich vollinhaltlich Bezug genommen wird.

Bei derartigen Formschlußelementen 66, 68 verbleibt somit nur noch ein Freiheitsgrad für eine Relativbewegung zwischen dem Werkzeughalterkörper 32 und dem Revolverkopf 36, nämlich für eine Bewegung in Richtung der zweiten Positionierrichtung 69, die im vorliegenden Ausführungsbeispiel ungefähr parallel zu einer senkrecht zur X-Richtung und senkrecht zur Z-Richtung verlaufenden Y-Richtung verläuft.

Wie in Fig. 2 dargestellt, besteht aufgrund von Toleranzen in der Drehmaschine das Problem, daß die Mittelachse 22 des in der Arbeitsstellung stehenden als Bohrer oder Reibahle ausgebildeten Werkzeugs 20 nicht exakt in einer Bearbeitungsebene 70 liegt, welche durch die Spindelachse 14 hindurch und parallel zur X-Richtung verläuft, sondern in einem geringfügigen Abstand zu dieser und zwar in der senkrecht zur Z-Richtung und X-Richtung verlaufenden Y-Richtung.

Selbst wenn dieser Abstand minimal ist, das heißt im Bereich von weniger als einem Zehntel oder einem Hundertstel Millimeter, so wird dadurch die Bearbeitung des Werkstücks 16 negativ beeinträchtigt, da das als Bohrer oder Reibahle ausgebildete Werkzeug 20 beispielsweise nicht zentriert zur Spindelachse 14 arbeitet und somit beispielsweise im Fall eines derartigen Werkzeuges 20 im Werkstück 16 eine Bohrung hergestellt wird, die größer ist als der durch das derartige Werkzeug 20 vorgegebene Durchmesser.

Sofern der Revolverkopf 36 nicht durch die Maschinensteuerung gesteuert in Y-Richtung bewegbar ist, besteht bei der vorliegenden Erfindung die Möglichkeit, eine Ausrichtachse 72 des Werkzeughalterkörpers, welche die Mittelachse 22 des Werkzeugs 20 schneidet und sich ungefähr parallel zur Schaftlängsachse 60 erstreckt, wobei die Ausrichtachse 72 teilweise mit der Schaftlängsachse 60 zusammenfallen kann, relativ zum Revolverkopf 36 zu justieren, um das Werkzeug 20 so anzuordnen, daß dieses in der Bearbeitungsebene 70 arbeitet.

Die Position des Werkzeughalterkörpers 32 und somit der Ausrichtachse 72 relativ zum Revolverkopf 36 wird in Y-Richtung festgelegt durch einen Stützflächenbereich 80 des Schaftes 50, mit welchem dieser an einem dem Spannelement 54 gegenüberliegenden Positionierflächenbereich 82 des Aufnahme 52 anliegt und durch das Spannelement 54 kraftbeaufschlagt in Anlage gehalten wird.

Vorzugsweise ist der Stützflächenbereich 80 durch ein der Verzahnung 58 gegenüberliegendes Umfangssegment des Schaftes 50 gebildet, welches sich über einen Winkelbereich WB um die Schaftlängsachse 60 erstreckt, der größer als 90°, vorzugsweise größer als 270° ist.

Dieser Stützflächenbereich 80 liegt an dem Positionierflächenbereich 82 der Aufnahme 52 an, welcher sich über ungefähr denselben Winkelbereich WB um die Schaftlängsachse 60 erstreckt.

Die Positionierung der Ausrichtachse 72 relativ zu dem Stützflächenbereich 80 des Schaftes 50 erfolgt durch Einstellen eines radialen Abstandes des Stützflächenbereichs 80 relativ zu der Ausrichtachse 72.

Hierzu ist der Schaft 50 aus einem Schaftkernkörper 90 gebildet, der fest mit dem Werkzeughalterkörper 32 verbunden ist, und zu welchem die Ausrichtachse 72 ebenfalls in definierter Orientierung verläuft.

An dem Schaftkernkörper 90 stützt sich ein erstes Schaftsegment 92 ab, welches in einem Stützflächensegment 93 den gesamten Stützflächenbereich 80 trägt und somit an dem Positionierflächenbereich 82 der Aufnahme 52 anlegbar ist.

Ferner ist der Schaftkernkörper 90 noch einstückig mit einem zweiten Schaftsegment 94 verbunden, welches die Verzahnung 58 trägt und durch das Spannelement 54 beaufschlagbar ist.

Die Abstützung des ersten Schaftsegments 92 am Schaftkernkörper 90 erfolgt über eine als Ganzes mit 100 bezeichnete Einstelleinrichtung, welche eine vom Schaftkernkörper 90 gebildetes Keilelement 101 mit einer Keilfläche 102 und eine vom ersten Schaftsegment 92 gebildetes Keilelement 103 mit einer Keilfläche 104 umfaßt, welche mit der Ausrichtachse 72 denselben Keilwinkel einschließen und außerdem, wie in Fig. 3 und 4 dargestellt, parallel zu einer Querrichtung 106 zur Ausrichtachse 72 verlaufen, welche ihrerseits ungefähr parallel zur Bearbeitungsebene 70 und somit auch ungefähr parallel zur Mittelachse 22 des Werkzeugs 20 oder auch ungefähr parallel zur Verzahnung 58 ausgerichtet ist.

Die in korrespondierenden Keilwinkeln zur Ausrichtachse 72 verlaufenden Keilflächen 102, 104 ermöglichen eine Verschiebung des das verschiebliche Keilelement 103 bildenden ersten Schaftsegments 92 in einer zur Ausrichtachse 72 ungefähr parallelen Verschieberichtung 108, wobei die Ausrichtung des Stützflächenbereichs 80 relativ zur Ausrichtachse 72 erhalten bleibt, allerdings der Stützflächenbereich 80 in einer quer zu den Keilflächen 102, 104 und senkrecht zur Querrichtung 106 verlaufenden Einstellrichtung 110 verschiebbar ist, so daß auch der radiale Abstand des Stützflächenbereichs 80 relativ zur Ausrichtachse 72 variiert.

Durch die Verschiebung des ersten Schaftsegments 92 besteht somit die Möglichkeit, den radialen Abstand des Stützflächenbereichs 80 zur Ausrichtachse 72 in der Einstellrichtung 110 zu variieren und somit auch den Abstand der Ausrichtachse 72 von dem Positionierflächenbereich 82 der Aufnahme 52 zu variieren und damit die Ausrichtachse 72 in Y-Richtung zur Spindelachse 14 exakt zu justieren.

Um eine präzise Führung des das verschiebliche Keilelement 103 bildenden ersten Schaftsegments 92 beim Verschieben relativ zum Schaftkernkörper 90 zu erreichen, sind in dem Schaftkernkörper 90 Führungsbolzen 112, 114 angeordnet, welche in korrespondierende, sich ausgehend von der Keilfläche 104 in das erste Schaftsegment 92 als Vertiefung hinein erstreckende Führungsnuten 116, 118 im ersten Schaftsegment 92 dadurch eingreifen, daß die Führungsbolzen 112, 114 über die Keilfläche 102 überstehen und in die Führungsnuten 116, 118 eintauchen.

Damit läßt sich das erste Schaftsegment 92 an dem Schaftkernkörper 90 derart führen, daß dies nur in der Verschieberichtung 108 und nicht quer zu dieser und somit insbesondere nicht quer zur Ausrichtachse 72 in Richtung der Keilflächen 102, 104 bewegbar ist.

Ferner sind vorzugsweise zwei in den Schaftkernkörper 90 einschraubbare Spannschrauben 122, 124 vorgesehen, welche Durchbrüche 126, 128 in dem ersten Schaftsegment 92 durchsetzen, wobei die Durchbrüche 126, 128 als in Verschieberichtung 108 langgestreckte Löcher ausgebildet sind, so daß das erste Schaftsegment 92 auch relativ zu den Spannschrauben 122 und 124 verschiebbar und durch die Spannschrauben 122 und 124 in Richtung des Schaftkernkörpers 90 beaufschlagbar ist, und somit eine kraftschlüssige Fixierung des ersten Schaftsegments 92 am Schaftkernkörper 90 erfolgen kann.

Wie in Fig. 3 und 4 dargestellt, ist der Schaftkernkörper 90 so ausgebildet, daß dessen Mantelflächen 130 mit Spiel in den diesen gegenüberliegenden Innenflächen 132 der Aufnahme 52 sitzen, so daß sich der Schaftkernkörper 90 in der Aufnahme 52 in der senkrecht zur Querrichtung 106 und quer zur Ausrichtachse 72 verlaufenden Einstellrichtung 110 in unterschiedlichem Abstand von dem Positionierflächenbereich 82 positionieren läßt, ohne daß die Mantelfläche 130 des Schaftkernkörpers 90 und des zweiten Schaftsegments 94 mit der Innenfläche 132 der Aufnahme 52 kollidieren.

Die Beaufschlagung des Schaftes 50 durch das Spannelement 54 bewirkt somit lediglich ein Anlegen des Stützflächenbereichs 80 am Positionierflächenbereich 82, welches für die Ausrichtung des Schaftes 50 in der Einstellrichtung 110 relativ zur Aufnahme 52 maßgebend ist.

Durch die Bewegbarkeit des Schaftes 50 in der Einstellrichtung 110 ist bei über koaxial zum Schaft 50 erfolgendem Werkzeugantrieb noch eine Ausgleichskupplung vorzusehen, um den auftretenden Versatz in der Einstellrichtung 110 auszugleichen.

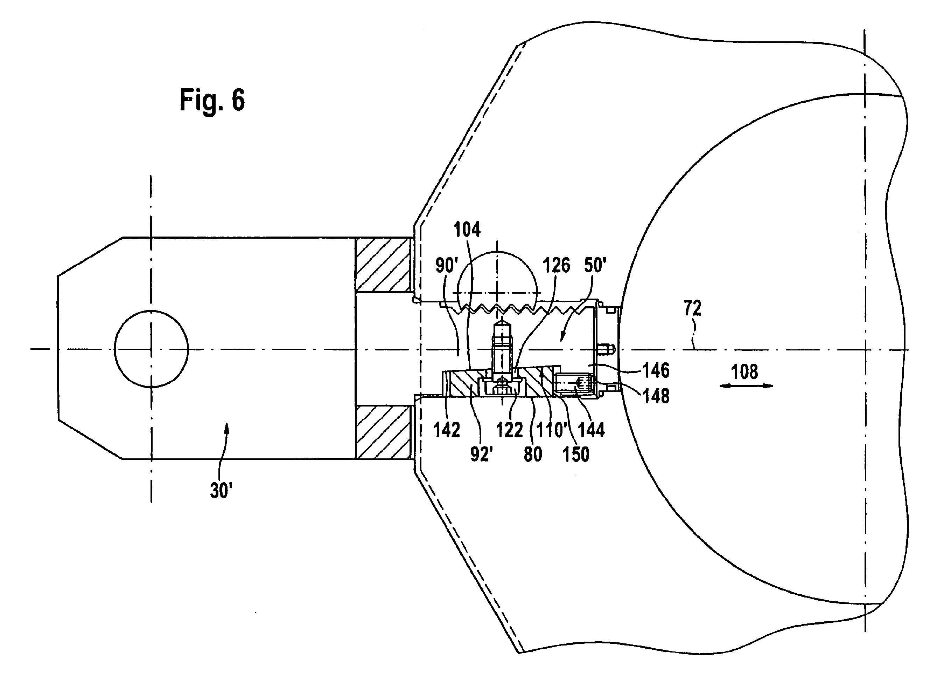

Bei einem zweiten Ausführungsbeispiel eines erfindungsgemäßen Werkzeughalters 30', dargestellt in Fig. 6, ist das erste Schaftsegment 92' so ausgebildet, daß es in einer Ausnehmung 142 im Schaftkernkörper 90' liegt und in dieser Ausnehmung 142 ebenfalls in der Verschieberichtung 108 verschiebbar ist, wobei der radiale Abstand des Stützflächenbereichs 80 zur Ausrichtachse 72 durch die Einstelleinrichtung 100' einstellbar ist, die in gleicher Weise wie die Einstellrichtung 100 ausgebildet ist. Die Position des ersten Schaftsegments 92' in der Verschieberichtung 108 ist durch eine Stellschraube 144 einstellbar ist, welche in einer Gewindebohrung 148 angeordnet ist, die eine die Ausnehmung 142 endseitig des Schaftes 50 abschließende Wand 146 durchsetzt und somit ist mit der Stellschraube 144 eine der Wand 146 zugewandte Endfläche 150 des ersten Schaftsegments 92 beaufschlagbar, um dieses in der Verschieberichtung 108 zu verschieben.

Bei dem zweiten Ausführungsbeispiel können dabei die Führungsbolzen 112 und 114 und die Führungsnuten 116 und 118 entfallen, da das erste Schaftsegment 92' in der Ausnehmung 142 auch nur in Richtung der Verschieberichtung 108 bewegbar geführt werden kann.

Im übrigen sind diejenigen Teile des zweiten Ausführungsbeispiels, die mit denen des ersten Ausführungsbeispiels identisch sind, mit denselben Bezugszeichen versehen, so daß hinsichtlich der Beschreibung derselben vollinhaltlich auf die Ausführungen zum ersten Ausführungsbeispiel Bezug genommen werden kann.

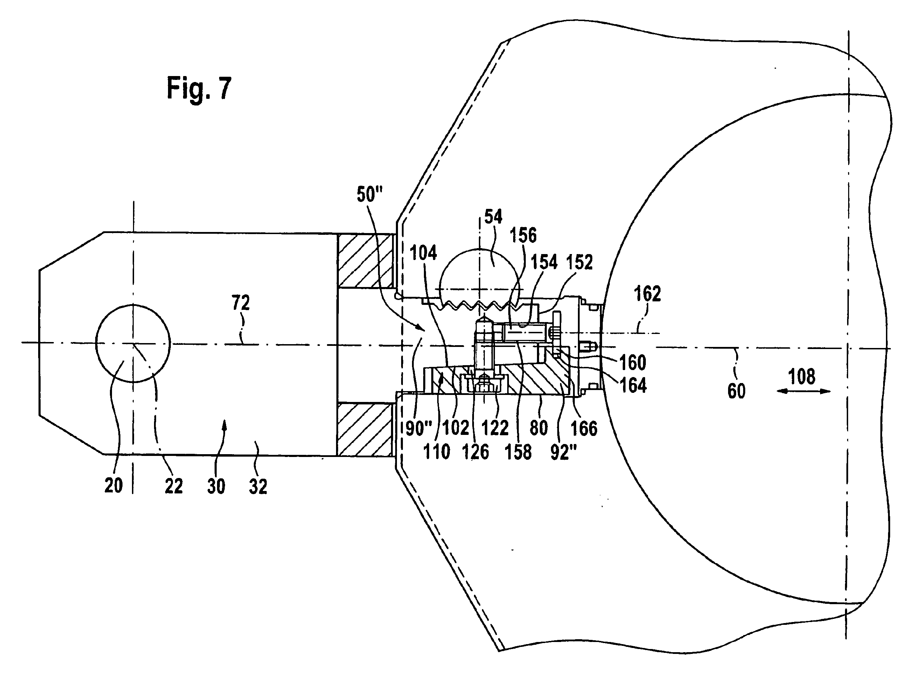

Bei einem dritten Ausführungsbeispiel, dargestellt in Fig. 7, ist der Schaftkernkörper 90" mit einer von einer Endseite 152 desselben in diesen eindringenden Gewindebohrung 154 versehen, in welchen eine Stellschraube 156 einschraubbar ist, wobei die Stellschraube einen scheibenförmigen Kopf 160 aufweist, welcher über einen Gewindeabschnitt 158 der Stellschraube radial übersteht.

Die Stellschraube 156 ist um eine Längsachse 162 drehbar, welche beispielsweise ungefähr parallel zur Schaftlängsachse 60 verläuft.

Der scheibenförmige Kopf 160 greift dabei in eine Nut 164 des ersten Schaftsegments 92" ein, wobei die Nut 164 in einem Führungskörper 166 des ersten Schaftsegments 92 angeordnet ist, der sich von dem Stützflächenbereich 80 ausgehend in Richtung der Stellschraube 156 erstreckt.

Durch den in die Nut 164 eingreifenden Kopf 160 der Stellschraube 156 ist durch Drehen der Stellschraube 156 das erste Schaftsegment 92" in der Verschieberichtung 108 relativ zum Schaftkernkörper 90" verschiebbar und somit ist aufgrund der Keilflächen 102 und 104 die Lage des Stützflächenbereichs 80 relativ zur Ausrichtachse 72 in der Einstelleinrichtung 110 in gleicher Weise wie beim ersten und zweiten Ausführungsbeispiel einstellbar.

Im übrigen ist in gleicher Weise wie beim zweiten Ausführungsbeispiel lediglich noch eine Spannschraube 122 vorgesehen, welche in den jeweiligen Schaftkernkörper 90' bzw. 90" einschraubbar ist und jeweils den in dem ersten Schaftsegment 90' bzw. 92" vorgesehenen Durchbruch 126 durchsetzt, in gleicher Weise wie dies im Zusammenhang mit dem ersten Ausführungsbeispiel beschrieben wurde.

Hinsichtlich aller übrigen Elemente wurden auch beim dritten Ausführungsbeispiel gemäß Fig. 7 dieselben Bezugszeichen verwendet wie beim ersten und zweiten Ausführungsbeispiel, so daß hinsichtlich der Beschreibung dieser einzelnen Teile vollinhaltlich auf die voranstehenden Ausführungen Bezug genommen werden kann.

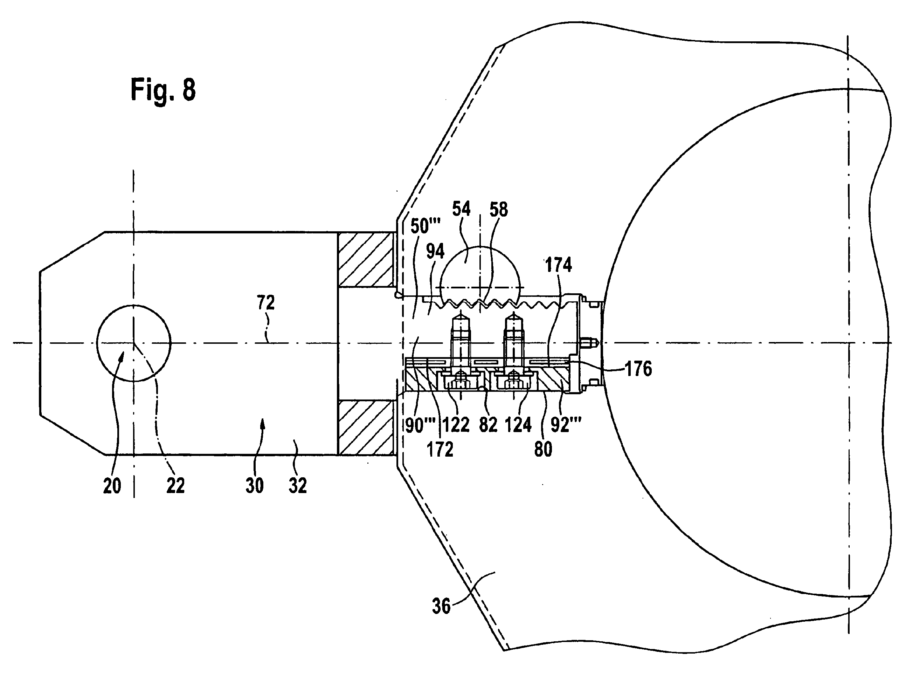

Bei einem vierten Ausführungsbeispiel, dargestellt in Fig. 8, ist der Schaftkernkörper 90"' mit einer Abstützfläche 172 versehen, welche beispielsweise parallel zur Ausrichtachse 72 und parallel zur Querrichtung 106 verläuft. Auf dieser Abstützfläche stützt sich das erste Schaftsegment 92"' mit einer dem Schaftkernkörper 90"' zugewandten Basisfläche 174 ab, wobei zwischen der Abstützfläche 172 und des Schaftkernkörpers 90' und der Basisfläche 174 des ersten Schaftsegments 92"' ein Abstandsplättchen 176 einsetzbar ist, mit welchem ein Abstand zwischen der Abstützfläche 172 und der Basisfläche 174 und somit auch ein Abstand des Stützflächenbereichs 80 von der Ausrichtachse 72 in der Einstellrichtung 110 festlegbar ist, wobei zur exakten Positionierung ein Satz von Abstandsplättchen mit einer beispielsweise in einem Rastermaß variierenden Dicke zur Verfügung steht und jeweils dann das Abstandsplättchen 176 zwischen die Abstützfläche 172 und die Basisfläche 174 einsetzbar ist, mit welchem eine geeignete Position der Ausrichtachse 72 relativ zum Stützflächenbereich 80 der Aufnahme 52 einstellbar ist.

Das erste Schaftsegment 92"' ist ebenfalls durch die Spannschrauben 122 und 124 mit dem Schaftkernkörper 92" verbindbar.

Alle übrigen Teile des vierten Ausführungsbeispiels - insoweit als sie mit denen der voranstehenden Ausführungsbeispiele identisch sind - sind mit denselben Bezugszeichen versehen, so daß hinsichtlich der Beschreibung derselben vollinhaltlich auf die Ausführungen zu den voranstehenden Ausführungsbeispielen Bezug genommen wird.

## Patentansprüche

1. Werkzeughalter (30) für Werkzeugträger von Werkzeugmaschinen, umfassend einen ein Werkzeug (20) tragenden Werkzeughalterkörper (32) mit einer Anlagefläche (48), einen vom Werkzeughalterkörper (32) abstehenden und sich über die Anlagefläche (48) hinauserstreckenden Schaft (50) mit einem Stützflächenbereich (80), wobei zum exakten Positionieren des Werkzeughalterkörpers (32) an dem Werkzeugträger (36) der Werkzeughalterkörper (32) in Richtung einer ungefähr parallel zu einer Schaftlängsachse (60) verlaufenden Ausrichtachse (72) durch Anlegen der Anlagefläche (48) an einer Auflageseite (46) des Werkzeugträgers (36) positionierbar ist und in einer Richtung (Y) quer zur Ausrichtachse (72) durch Anlegen des Stützflächenbereichs (80) an einem Positionierflächenbereich (82) einer im Werkzeugträger (36) vorgesehenen Aufnahme (52) für den Schaft (50) positionierbar ist,
**dadurch gekennzeichnet, daß** zur Einstellung eines Abstandes der Ausrichtachse (72) des Werkzeughalterkörpers (32) von dem Stützflächenbereich (80) des Schaftes (50) der Schaft (50) mindestens ein gegenüber der Ausrichtachse (72) variabel positionierbares und den Stützflächenbereich (80) tragendes Stützflächensegment (93) umfaßt.

2. Werkzeughalter nach Anspruch 1, **dadurch gekennzeichnet, daß** der Schaft (50) mindestens zwei Schaftsegmente (92, 94) aufweist, von denen ein erstes (92) das Stützflächensegment (93) bildet.

3. Werkzeughalter nach Anspruch 2, **dadurch gekennzeichnet, daß** ein zweites (94) der Schaftsegmente (92, 94) eine Verzahnung (58) aufweist.

4. Werkzeughalter nach Anspruch 3, **dadurch gekennzeichnet, daß** das erste Schaftsegment (92) auf einer dem zweiten Schaftsegment (94) gegenüberliegenden Seite des Schaftes (50) angeordnet ist.

5. Werkzeughalter nach einem der Ansprüche 2 bis 4, **dadurch gekennzeichnet, daß** das erste Schaftsegment (92) ein vom Schaft (50) trennbares Teil ist.

6. Werkzeughalter nach einem der voranstehenden Ansprüche, **dadurch gekennzeichnet, daß** das Stützflächensegment (93) relativ zu einem definiert zur Ausrichtachse (72) verlaufenden Schaftkernkörper (90) variabel positionierbar ist.

7. Werkzeughalter nach Anspruch 6, **dadurch gekennzeichnet, daß** das Stützflächensegment (93) relativ zum Schaftkernkörper (90) mittels einer Einstelleinrichtung (100) in einer Einstellrichtung (110) variabel positionierbar ist.

8. Werkzeughalter nach Anspruch 7, **dadurch gekennzeichnet, daß** die Einstelleinrichtung (100) ein Keilgetriebe (101, 103) umfaßt.

9. Werkzeughalter nach Anspruch 8, **dadurch gekennzeichnet, daß** die Einstelleinrichtung (100) mindestens ein einstellbares Keilelement (103) aufweist.

10. Werkzeughalter nach Anspruch 8 oder 9, **dadurch gekennzeichnet, daß** die Einstelleinrichtung (100) zwei zusammenwirkende Keilelemente (101, 103) aufweist.

11. Werkzeughalter nach Anspruch 9 oder 10, **dadurch gekennzeichnet, daß** der Schaftkernkörper (90) als Keilelement (101) ausgebildet ist.

12. Werkzeughalter nach einem der Ansprüche 9 bis 11, **dadurch gekennzeichnet, daß** das Stützflächensegment (93) als Keilelement (103) ausgebildet ist.

13. Werkzeughalter nach einem der Ansprüche 9 bis 12, **dadurch gekennzeichnet, daß** das Keilelement (103) in einer Verschieberichtung (108) verschiebbar ist.

14. Werkzeughalter nach Anspruch 13, **dadurch gekennzeichnet, daß** das Keilelement (103) ungefähr in Richtung parallel zur Schaftlängsachse (60) verschiebbar ist.

15. Werkzeughalter nach einem der Ansprüche 9 bis 14, **dadurch gekennzeichnet, daß** das Keilelement (103) durch Führungselemente (112, 114, 116, 118; 142) bewegbar geführt ist.

16. Werkzeughalter nach Anspruch 15, **dadurch gekennzeichnet, daß** das Keilelement (103) durch die Führungselemente (112, 114, 116, 118; 142) am Schaftkernkörper (90) nur in einer definierten Verschieberichtung (108) bewegbar geführt ist.

17. Werkzeughalter nach einem der Ansprüche 9 bis 16, **dadurch gekennzeichnet, daß** das Keilelement (103) durch ein Stellelement (144, 156) einstellbar ist.

18. Werkzeughalter nach einem der Ansprüche 9 bis 17, **dadurch gekennzeichnet, daß** das Keilelement (103) kraftschlüssig in der eingestellten Position festlegbar ist.

19. Werkzeughalter nach Anspruch 18, **dadurch gekennzeichnet, daß** das Keilelement (103) relativ zum Schaftkernkörper (90) in der eingestellten Position festlegbar ist.

20. Werkzeughalter nach einem der Ansprüche 1 bis 7, **dadurch gekennzeichnet, daß** die Einstelleinrichtung (100') ein austauschbares Abstandselement (176) umfaßt, welches zwischen dem Schaftkernkörper (90) und dem Stützflächensegment (93) einsetzbar ist.

21. Werkzeughalter nach einem der voranstehenden Ansprüche, **dadurch gekennzeichnet, daß** der Werkzeughalterkörper (32) mindestens ein Formschlußelement (66) aufweist, mit welchem dieser an einem korrespondierenden Formschlußelement (68) drehfest relativ zu einem Werkzeugträger (36) festlegbar ist.

22. Werkzeughalter nach Anspruch 21, **dadurch gekennzeichnet, daß** die Formschlußelemente (66, 68) eine Relativbewegung zwischen Werkzeughalterkörper und Werkzeugträger in einer zweiten Positionierrichtung (69) zulassen.

23. Werkzeughalter nach Anspruch 22, **dadurch gekennzeichnet, daß** die zweite Positionierrichtung (69) ungefähr parallel zu der Einstellrichtung (110) verläuft.

## Claims

1. Tool holder (30) for tool carriers of machine tools, comprising a tool holder member (32) bearing a tool (20) and having a contact surface (48), a shaft (50) protruding from the tool holder member (32), extending beyond the contact surface (48) and having a supporting surface area (80), wherein for the exact positioning of the tool holder member (32) on the tool carrier (36) the tool holder member (32) is positionable in the direction of an axis of alignment (72) extending approximately parallel to a longitudinal axis (60) of the shaft as a result of the contact surface (48) abutting on a bearing side (46) of the tool carrier (36) and is positionable in a direction (Y) transverse to the axis of alignment (72) as a result of the supporting surface area (80) abutting on a positioning surface area (82) of a receptacle (52) for the shaft (50) provided in the tool carrier (36), **characterized in that** in order to adjust a distance of the axis of alignment (72) of the tool holder member (32) from the supporting surface area (80) of the shaft (50) the shaft (50) comprises at least one supporting surface segment (93) bearing the supporting surface area (80) and positionable variably in relation to the axis of alignment (72).

2. Tool holder as defined in claim 1, **characterized in that** the shaft (50) has at least two shaft segments (92, 94), a first one (92) thereof forming the supporting surface segment (93).

3. Tool holder as defined in claim 2, **characterized in that** a second one (94) of the shaft segments (92, 94) has teeth (58).

4. Tool holder as defined in claim 3, **characterized in that** the first shaft segment (92) is arranged on a side of the shaft (50) located opposite the second shaft segment (94).

5. Tool holder as defined in any one of claims 2 to 4, **characterized in that** the first shaft segment (92) is a part separable from the shaft (50).

6. Tool holder as defined in any one of the preceding claims, **characterized in that** the supporting surface segment (93) is positionable variably relative to a shaft core member (90) extending in a defined manner relative to the axis of alignment (72).

7. Tool holder as defined in claim 6, **characterized in that** the supporting surface segment (93) is positionable variably in a direction of adjustment (110) relative to the shaft core member (90) by means of an adjusting device (100),

8. Tool holder as defined in claim 7, **characterized in that** the adjusting device (100) comprises a wedge gear (101, 103).

9. Tool holder as defined in claim 8, **characterized in that** the adjusting device (100) has at least one adjustable wedge element (103).

10. Tool holder as defined in claim 8 or 9, **characterized in that** the adjusting device (100) has two interacting wedge elements (101, 103).

11. Tool holder as defined in claim 9 or 10, **characterized in that** the shaft core member (90) is designed as a wedge element (101).

12. Tool holder as defined in any of claims 9 to 11, **characterized in that** the supporting surface segment (93) is designed as a wedge element (103).

13. Tool holder as defined in any one of claims 9 to 12, **characterized in that** the wedge element (103) is displaceable in a direction of displacement (108).

14. Tool holder as defined in claim 13, **characterized in that** the wedge element (103) is displaceable approximately in a direction parallel to the longitudinal axis (60) of the shaft.

15. Tool holder as defined in any one of claims 9 to 14, **characterized in that** the wedge element (103) is guided for movement by guiding elements (112, 114, 116, 118; 142).

16. Tool holder as defined in claim 15, **characterized in that** the wedge element (103) is guided by the guiding elements (112, 114, 116, 118; 142) for movement on the shaft core member (90) only in one defined direction of displacement (108).

17. Tool holder as defined in any one of claims 9 to 16, **characterized in that** the wedge element (103) is adjustable by a regulating element (144, 156).

18. Tool holder as defined in any one of claims 9 to 17, **characterized in that** the wedge element (103) is securable in the adjusted position in a force locking manner.

19. Tool holder as defined in claim 18, **characterized in that** the wedge element (103) is securable in the adjusted position relative to the shaft core member (90).

20. Tool holder as defined in any one of claims 1 to 7, **characterized in that** the adjusting device (100') comprises a replaceable spacer element (176) insertable between the shaft core member (90) and the supporting surface segment (93).

21. Tool holder as defined in any one of the preceding claims, **characterized in that** the tool holder member (32) has at least one form locking element (66), said tool holder member being securable with said form locking element on a corresponding form locking element (68) so as to be non-rotatable relative to a tool carrier (36).

22. Tool holder as defined in claim 21, **characterized in that** the form locking elements (66, 68) allow a relative movement between tool holder member and tool carrier in a second positioning direction (69).

23. Tool holder as defined in claim 22, **characterized in that** the second positioning direction (69) extends approximately parallel to the direction of adjustment (110).

## Revendications

1. Porte-outil (30) pour support d'outil de machines-outils, comprenant un corps de porte-outil, (32) portant un outil (20), avec une surface de contact (48), une tige (50) avec une surface de soutien (80), dépassant du corps (32) et s'étendant au-delà de la surface de contact (48), dans lequel, pour positionner exactement le corps (32) sur le support d'outil (36), le corps (32) peut être positionné dans la direction d'un axe d'alignement (72), approximativement parallèle à un axe longitudinal (60) de la tige en plaquant la surface de contact (48) contre un côté d'appui (46) du support d'outil (36) et peut être positionné, dans une direction (Y) perpendiculaire à l'axe d'alignement (72), en plaquant la zone de surface de soutien (80) contre une zone de surface de positionnement (82) d'un logement (52) pour la tige (50), prévu dans le support d'outil (36),
**caractérisé en ce que**
pour ajuster une distance entre l'axe d'alignement (72) du corps de porte-outil (32) et la zone de surface de soutien (80) de la tige (50), la tige (50) comprend au moins un segment de zone de soutien (93) pouvant être positionné de manière variable par rapport à l'axe d'alignement (72) et portant la zone de surface d'appui (80).

2. Porte-outil selon la revendication 1,
**caractérisé en ce que**
la tige (50) présente au moins deux segments de tige (92, 94) dont un premier (92) constitue le segment de surface d'appui (93).

3. Porte-outil selon la revendication 2,
**caractérisé en ce qu'**
un deuxième segment (94) parmi les segments de tige (92, 94) présente une denture (58).

4. Porte-outil selon la revendication 3,
**caractérisé en ce que**
le premier segment de tige (92) est disposé sur un côté de la tige (50) opposé au deuxième segment de tige (94).

5. Porte-outil selon l'une quelconque des revendications 2 à 4,
**caractérisé en ce que**
le premier segment de tige (92) peut être séparé de la tige (50).

6. Porte-outil selon l'une quelconque des revendications précédentes,
**caractérisé en ce que**
le segment de surface de soutien (93) peut être positionné de façon variable par rapport à un noyau de tige (90) occupant une place définie par rapport à l'axe d'alignement (72).

7. Porte-outil selon la revendication 6,
**caractérisé en ce que**
le segment de surface de soutien (93) peut être positionné de façon variable par rapport au noyau de tige (90) au moyen d'un dispositif d'ajustage (100) dans une direction d'ajustement (110).

8. Porte-outil selon la revendication 7,
**caractérisé en ce que**
le dispositif d'ajustage (100) comprend un engrenage conique (101, 103).

9. Porte-outil selon la revendication 8,
**caractérisé en ce que**
le dispositif d'ajustage (100) présente au moins une clavette (103) ajustable.

10. Porte-outil selon la revendication 8 ou la revendication 9,
**caractérisé en ce que**
le dispositif d'ajustage (100) présente deux clavettes (101, 103) qui interagissent entre elles.

11. Porte-outil selon la revendication 9 ou la revendication 10,
**caractérisé en ce que**
le noyau de tige (90) est en forme de clavette (101).

12. Porte-outil selon l'une quelconque des revendications 9 à 11,
**caractérisé en ce que**
le segment de surface de soutien (93) est en forme de clavette (103).

13. Porte-outil selon l'une quelconque des revendications 9 à 12,
**caractérisé en ce que**
la clavette (103) peut se déplacer dans une direction de déplacement (108).

14. Porte-outil selon la revendication 13,
**caractérisé en ce que**
la clavette (103) peut se déplacer approximativement dans une direction parallèle à l'axe longitudinal (60) de la tige.

15. Porte-outil selon l'une quelconque des revendications 9 à 14,
**caractérisé en ce que**
la clavette (103) peut être déplacée par des éléments de guidage (112, 114, 116, 118 ; 142).

16. Porte-outil selon la revendication 15,
**caractérisé en ce que**
la clavette (103) peut être déplacée par les éléments de guidage (112, 114, 116, 118 ; 142) sur le noyau (90) de la tige uniquement dans une direction de déplacement (108) défini.

17. Porte-outil selon l'une quelconque des revendications 9 à 16,
**caractérisé en ce que**
la clavette (103) peut être ajustée par un élément d'ajustage (144, 156).

18. Porte-outil selon l'une quelconque des revendications 9 à 17,
**caractérisé en ce que**
la clavette (103) peut être immobilisée dans la position ajustée par verrouillage.

19. Porte-outil selon la revendication 18,
**caractérisé en ce que**
la clavette (103) peut être immobilisée par rapport au noyau (90) de la tige dans la position réglée.

20. Porte-outil selon l'une quelconque des revendications 1 à 7,
**caractérisé en ce que**
le dispositif d'ajustage (100') comprend un distanceur (176) échangeable, lequel peut être placé entre le noyau (90) de la tige et le segment de surface d'appui (93).

21. Porte-outil selon l'une quelconque des revendications précédentes,
**caractérisé en ce que**
le corps (32) du porte-outil présente au moins un élément de liaison par complémentarité de forme (66), avec lequel celui-ci peut être immobilisé par rapport à un support d'outil (36) sur un élément de liaison par complémentarité de forme (68) correspondant.

22. Porte-outil selon la revendication 21,
**caractérisé en ce que**
les éléments de liaison par complémentarité de forme (66, 68) permettent un mouvement relatif dans une deuxième direction de positionnement (69) entre le corps du porte-outil et le support d'outil.

23. Porte-outil selon la revendication 22,
**caractérisé en ce que**
la deuxième direction de positionnement (69) est approximativement parallèle à la direction d'ajustement (110).
